# EUROPEAN PATENT APPLICATION

(11) **EP 1 681 587 A1**
(43) Date of publication of application: **19.07.2006**
(21) Application number: 04792846.0
(22) Date of filing: 22.10.2004
(51) Int. Cl.: G02B 6/00, C03C 25/00

(54) **OPTICAL FIBER TREATING DEVICE, TREATING METHOD AND OPTICAL FIBER**

(30) Priority: 28.10.2003 JP 2003367587
(71) Applicant: Shin-Etsu Chemical Company, Ltd., Tokyo 100-0004 (JP)
(72) Inventor: INOUE, Dai, Shin-Etsu Chemical Co., Ltd., Kashima-gun, Ibaraki 314-0116 (JP); OYAMADA, Hiroshi, Shin-Etsu Chemical Co., Ltd., Annaka-shi, Gunma 379-0195 (JP)
(74) Representative: Pfenning, Meinig & Partner GbR
(86) International application number: PCT/JP2004/015704
(87) International publication number: WO 2005/040872

(57) **Abstract**

There are provided an optical fiber processing apparatus, a processing method, and an optical fiber capable of monitoring a process of an optical fiber by gas containing at least heavy hydrogen and simultaneously detecting the termination of the process. The apparatus for processing an optical fiber in a gas atmosphere includes a door of a treatment container that puts the optical fiber in and out, a gas introducing port, a gas exhausting port, and a sampling fiber taking-out port. Further, the apparatus includes a light source that is connected to the optical fiber drawn from the sampling fiber taking-out port, and a light power meter that measures an absorption loss. In order to judge the termination of the gas process, it is preferable to include mechanism that monitors a value of the light power meter and judges the termination from the change of the value.

## Description

### TECHNICAL FIELD

The present invention relates to a gas process of an optical fiber, and more particularly relates to an optical fiber processing apparatus, a process method, and an optical fiber that are used for a gas process of an optical fiber performed by gas including at least heavy hydrogen.
The present application also relates to the following application, the contents of which are incorporated herein by reference if applicable.
A Japanese Patent Application No. 2003-367587
Filed on October 28, 2003.

### BACKGROUND ART

What is most used for a transmission channel making use of an optical fiber is a single mode optical fiber having a zero dispersion wavelength in the neighborhood of 1310nm. Conventionally, the optical fiber has been used for transmission of signal light of 1310nm. However, the optical fiber is recently being utilized for transmission of signal light with another wavelength according to the advance of a dispersion compensation technique.

In recent years, a CWDM (Coarse Wavelength Division Multiplexing) technique has been developed in order to cope with the increase of a required transmission capacity at low cost. Since the transmission technology uses a wide wavelength interval of about 20nm, interference does not occur between signal wavelengths even if a cheap light source is used. In order to transmit much signal light by means of an optical fiber in this technique, it is desirable that a usable wavelength region is wide. However, a conventional single mode optical fiber has an absorption loss peak caused by an OH radical in the neighborhood of 1383nm, and thus this wavelength region cannot be utilized. In order to be able to use this wavelength region, a low moisture optical fiber is developed, and is prescribed as International Standard even in ITU-TG652 table C, D.

In such an optical fiber, it is required to have small absorption loss peak even after ageing by hydrogen in addition to an early small absorption loss peak. For this reason, there is a method for processing an optical fiber in heavy hydrogen as one method improving resistance to hydrogen of an optical fiber. This method is a method using a characteristic that an OD radical formed by a reaction is different from an OH radical and does not form an absorption loss peak in a wavelength area to be used as signal light, even if heavy hydrogen D reacts on defect in the optical fiber in the same way as that of hydrogen H (see Patent Documents 1 to 3 and 5).

A process of an optical fiber by such heavy hydrogen is to put an optical fiber in a container capable of being sealed and leave the optical fiber for predetermined time in an atmosphere containing heavy hydrogen. Since heavy hydrogen is a combustible gas similarly to hydrogen, it is necessary to substitute an atmosphere within the container for an inert gas such as nitrogen to a risk-free extent before filling the container with an atmosphere containing heavy hydrogen.

In this manner, since the process of an optical fiber by heavy hydrogen is performed in a sealed container, the termination of heavy hydrogen treatment cannot simultaneously be detected. For that purpose, the termination of treatment has conventionally been confirmed by the confirmation of the improvement of resistance to hydrogen of the optical fiber taken and sampled from a processing apparatus after exposing the fiber to an atmosphere containing heavy hydrogen for empirically required time, or the confirmation of the annihilation of an absorption loss peak caused by defect in the vicinity of 630nm after measuring a loss spectrum before or after the heavy hydrogen treatment (see Patent Document 4).

[Patent Document 1] Japanese Patent Application Publication No. 1985-90852
[Patent Document 2] Japanese Patent Application Publication No. 1995-277770
[Patent Document 3] Japanese Patent Application Publication No. 2000-148450
[Patent Document 4] Japanese Patent Application Publication No. 2003-75293
[Patent Document 5] Japanese Patent Application Publication No. 2003-137580

### DISCLOSURE OF THE INVENTION

### PROBLEMS TO BE SOLBED BY THE INVENTION

As described above, since the termination of heavy hydrogen treatment has been confirmed by the measurement of resistance to hydrogen and the measurement of loss spectrum after the heavy hydrogen treatment, there has been a problem that excessive time is required for a heavy hydrogen treatment or a re-treatment is required when the treatment is insufficient and further an optical fiber used for sampling is wasted.
In view of the situation above, an object of the present invention is to monitor a process of an optical fiber by gas containing at least heavy hydrogen and provide an optical fiber processing apparatus, a processing method, and an optical fiber capable of simultaneously detecting the termination of process.

### MEANS FOR SOLVING THE PROBLEMS

To achieve this object, according to the first aspect of the present invention, there is provided an apparatus for processing an optical fiber in a gas atmosphere. The apparatus includes a door of a treatment container that puts the optical fiber in and out, a gas introducing port, a gas exhausting port, and a sampling fiber taking-out port. Further, the apparatus may include a light source that is connected to the optical fiber drawn from the sampling fiber taking-out port, and a light power meter that measures an absorption loss. In order to judge the termination of the gas process, it is preferable to include mechanism that monitors a value of the light power meter and judges the termination from the change of the value.

The light source may emit light in a wavelength area in which an absorption loss of the optical fiber is changed by the gas process, and further the wavelength may be an absorption loss peak wavelength of the optical fiber or a wavelength around the peak wavelength. The gas used for the process may be heavy hydrogen or gas containing heavy hydrogen, and a wavelength of light emitted from the light source may be around 630nm.

According to the second aspect of the invention, there is provided a method for processing an optical fiber in a gas atmosphere. The method includes the steps of: putting the optical fiber in a treatment container; filling the container with treatment gas; drawing the optical fiber from a sampling fiber taking-out port provided in the container to connect the fiber to a light source and a light power meter; monitoring an absorption loss of the optical fiber during processing gas; and simultaneously judging the termination of the gas process from the change of the absorption loss. Moreover, the termination of the gas process may be judged when an amount of light in a predetermined wavelength arrives at a set amount of light.

According to the third aspect of the invention, there is provided an optical fiber processing apparatus that processes an optical fiber in a gas atmosphere. The apparatus includes: a container main body that has an opening for putting the optical fiber in and out; a door that opens and closes the opening and forms airtight space between the door and the container main body by closing the opening; a gas introducing port that introduces gas into the space formed by the container main body and the door; a gas exhausting port that exhausts gas from the space formed by the container main body and the door; and an inside-outside connecting section that optically connects an outside of the space formed by the container main body and the door and both ends of the optical fiber accommodated in the space.

In the optical fiber processing apparatus, the inside-outside connecting section may draw and hold both ends of the optical fiber accommodated in the space to the outside of the space. Further, the inside-outside connecting section may be arranged in the container main body. Moreover, the inside-outside connecting section may be detachable from the container main body.

The optical fiber processing apparatus may further include: a light source that is arranged outside the space and introduces light into one side of the both ends of the optical fiber accommodated in the space; and a light power meter that is arranged outside the space and measures an amount of light coming out from the other side of the both ends of the optical fiber accommodated in the space.

In the optical fiber processing apparatus, the light source may emit light in a wavelength area in which an absorption loss of the optical fiber is changed by the gas process. Particularly, the light source may emit light with a wavelength around 630nm.

The optical fiber processing apparatus may further include a termination judging section that judges that the gas process has been terminated when the amount of light measured by the light power meter has exceeded a threshold value.

The optical fiber processing apparatus may further include a termination judging section that judges that the gas process has been terminated when a ratio of the amount of light measured by the light power meter to an amount of light from the light source has exceeded a threshold value. Moreover, the optical fiber processing apparatus may further include a termination judging section that judges that the gas process has been terminated when a rate of change of the amount of light measured by the light power meter has exceeded a threshold value. Moreover, the optical fiber processing apparatus may further include a termination judging section that judges that the gas process has been terminated when a change rate of a ratio of the amount of light measured by the light power meter to an amount of light from the light source has exceeded a threshold value.

The optical fiber processing apparatus may further include a gas controlling section that stops the introduction of gas and the exhaustion of gas to the space when the termination judging section judges that the gas process has been terminated.

The optical fiber processing apparatus may further include a door-opening controlling section that permits the door to be opened when the termination judging section judges that the gas process has been terminated.

The summary of the invention does not necessarily describe all necessary features of the present invention. The present invention may also be a sub-combination of the features described above.

### Effects of the Invention

According to the present invention, since resistance to hydrogen of an optical fiber is improved and an absorption loss peak caused by an OH radical in the vicinity of 1383nm is significantly reduced or disappears, it is possible to obtain an extremely superior single mode optical fiber.

### BRIEF DESCRIPTION OF THE DRAWINGS

Fig. 1 is a view schematically showing an optical fiber processing apparatus of Embodiment 1 of the present invention.

Fig. 2 is a graph showing a state of a change of processing time and an amount of transmitted light during processing gas.

Fig. 3 is a view schematically showing an optical fiber processing apparatus of Embodiment 2 of the present invention.

### BEST MODE FOR CARRYING OUT THE INVENTION

The invention will now be described based on the preferred embodiments, which do not intend to limit the scope of the present invention, but exemplify the invention. All of the features and the combinations thereof described in the embodiment are not necessarily essential to the invention.

As a result of superimposed keen examinations, the present inventor found that a heavy hydrogen treatment for an optical fiber has the following special feature.

[0008] For example, when mixed gas under normal pressure of heavy hydrogen 1% and nitrogen 1% is used as a treatment gas, a process is terminated in around three and a half days. In the meantime, the process is slowly not performed in proportion to time. For three days, an absorption loss does not have a change at all. Then, the process is terminated after the sudden advance for several hours. This change can be confirmed by annihilation of an absorption loss peak of NBOHC (a non-bridging oxygen hole center) having a peak at 630nm.

Thus, a port for taking out an optical fiber is provided in a container of a processing apparatus, both ends of the optical fiber to be processed are drawn, light in a wavelength area in which an absorption loss of the optical fiber is changed by a gas process is introduced from the one end, and the intensity of light transmitted through the other end is monitored during processing gas. In this way, the termination of gas process can simultaneously be grasped.

In addition, the termination of gas process is judged when an amount of light in a predetermined wavelength reaches a set amount of light. For example, gas containing heavy hydrogen is used as treatment gas, and a device emitting light of a wavelength around 630nm is used as a light source. In this way, the change of transmitted light amount (an absorption loss) is monitored.

### (Embodiment 1)

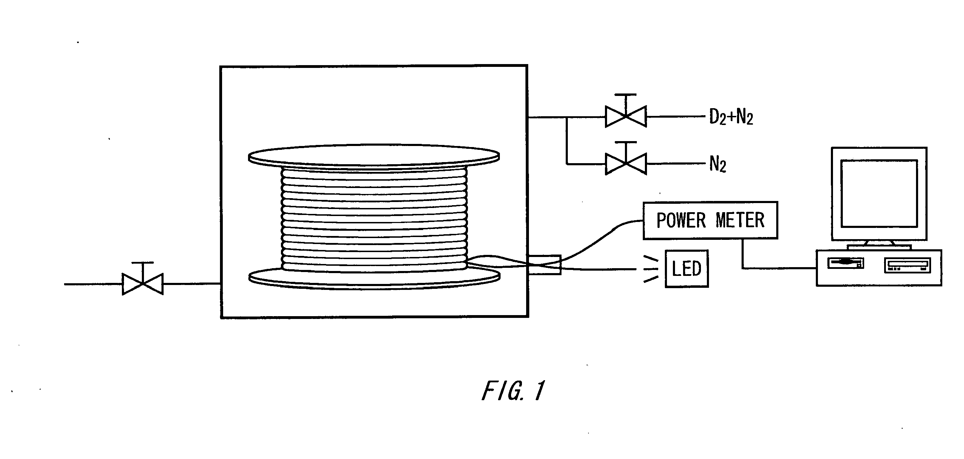

Fig. 1 shows a gas processing apparatus according to Embodiment 1 of the present invention.

[0008] This processing apparatus includes a container capable of being sealed, which has volume capable of accommodating a bobbin of an optical fiber to be processed with gas. The container is further provided with a gas introducing port, a gas exhausting port, and an optical fiber taking-out port, in addition to a door for putting a bobbin in and out

[0008] Since the optical fiber taking-out port can be exchanged, after drawing an optical fiber, the port is blocked up with epoxy resin to ensure seal up of the container. A valve is respectively provided in the gas introducing port and the gas exhausting port. When the container is filled with an enough atmosphere, the valves are closed to seal the container.

A nitrogen line and a treatment gas line are further provided in the gas introducing port. Purging the container and introducing treatment gas can be performed from the same gas introducing port.
The processing apparatus further includes a light source that introduces monitor light into the optical fiber and a light power meter. Gas including heavy hydrogen is used as treatment gas and an LED with a wavelength of 625nm is used as the light source. An output from the light power meter is input into a computer and the value is always monitored. The computer includes a system that informs a user or the like of the termination of the gas process in a state that the change is settled after a speed of the change of this value exceeds a threshold value set beforehand. Moreover, the system may be a system that informs a user or the like of the termination of the gas process in a state that the change is settled when a change rate of an output value from the light power meter becomes large once and then becomes small.

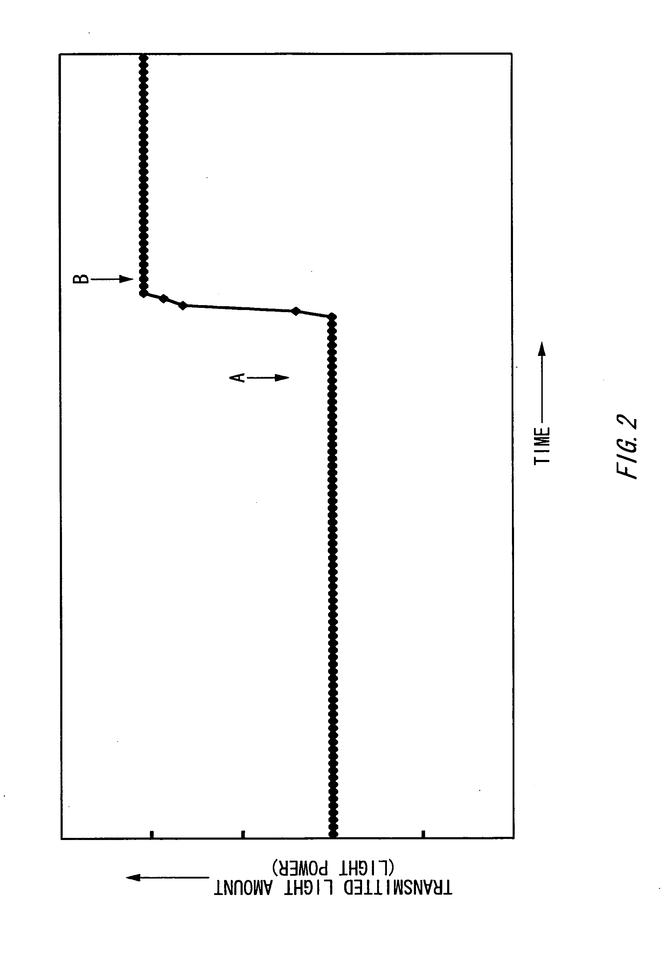

Fig. 2 is a graph showing a result of a gas process using this processing apparatus. Here, a horizontal axis shows processing time and a vertical axis shows the change of an amount of transmitted light (light power). An amount of transmitted light suddenly increases at the instant of the passage of a certain time, and the termination of the gas process is shown at an arrow B. This state is monitored by the computer.

[0030] After detecting the termination of the gas process, a hydrogen test has been performed for the taken-out optical fiber at a place of an arrow B. As a result, an absorption loss peak has not been increased and thus the system has functioned as intended.

[0030] In addition, in a hydrogen test for the optical fiber taken out at a place of an arrow A, an absorption loss peak has been increased.

### (Embodiment 2)

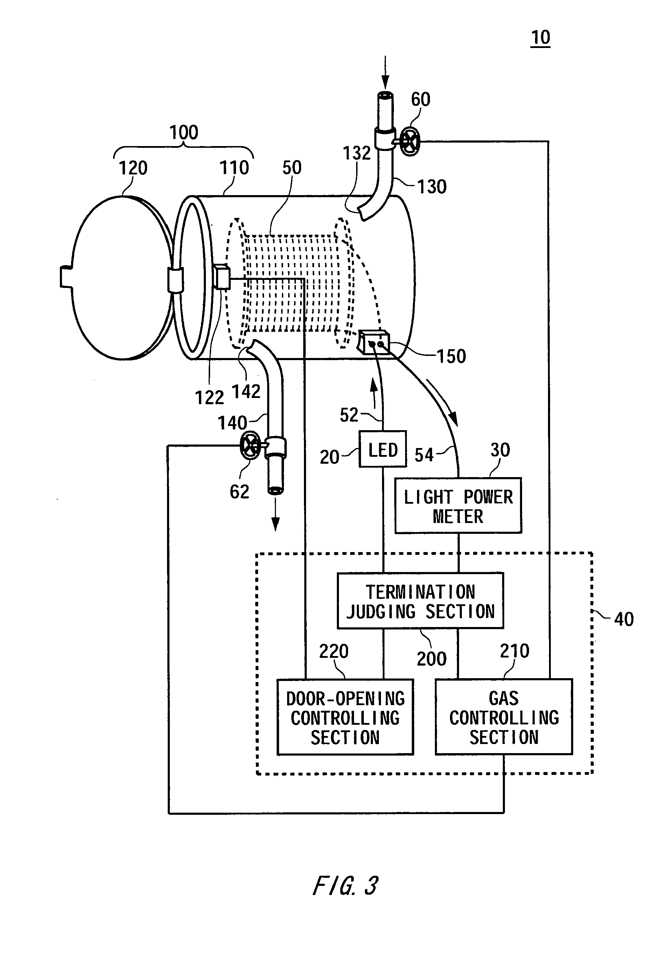

Fig. 3 shows a gas processing apparatus 10 according to Embodiment 2 of the present invention. The optical fiber processing apparatus 10 includes a container 100 having a container main body 110 that has an opening for putting an optical fiber 50 in and out and a door 120 that opens and closes the opening and forms airtight space between the door and the container main body by closing the opening. The optical fiber processing apparatus 10 further includes a lock 122 for locking the door 120 to the container main body 110 when closing the door 120, a gas introducing pipe 130 and a gas exhausting pipe 140 connected to the container 100, an inside-outside connecting section 150 arranged in the container 100, and an LED 20, a light power meter 30, and a PC 40 that are arranged outside the container 100.

The gas introducing pipe 130 introduces gas into space formed by the container main body 110 and the door 120 through a gas introducing port 132 provided in the container 100. Moreover, the gas exhausting pipe 140 exhausts gas from the space formed by the container main body 110 and the door 120 via a gas exhausting port 142 provided in the container 100. Valves 60 and 62 are respectively provided in the gas introducing pipe 130 and the gas exhausting pipe 140. These valves 60 and 62 control flow volume of gas of the gas introducing pipe 130 and the gas exhausting pipe 140. Here, the gas introducing port 132 and the gas exhausting port 142 are arranged in the container main body 110 in the container 100. In this way, when opening and closing the door 120, the gas introducing pipe 130 and the gas exhausting pipe 140 do not obstruct opening and closing.

The inside-outside connecting section 150 optically connects an outside of the space formed by the container main body 110 and the door 120 and both ends of the optical fiber 50 accommodated in the space. In the embodiment shown in Fig. 3, the inside-outside connecting section 150 is arranged in the container main body 110, draws and holds one end 52 and the other end 54 of the optical fiber 50 accommodated in the space in the container 100 to the outside of the space. The inside-outside connecting section 150 has a taking-out port penetrating through the container main body 110. Seal up of the space in the container 100 is ensured by blocking the taking-out port with epoxy resin after drawing one end 52 and the other end 54 of the optical fiber 50. Since the inside-outside connecting section 150 is arranged in the container main body 110, when opening and closing the door 120, it is possible to easily open and close the gas introducing pipe 130 without expanding and contracting one end 52 and the other end 54. Moreover, the inside-outside connecting section 150 may be detached from the container main body 110.

The LED 20 is optically connected to one end 52 of the optical fiber 50 accommodated in the space in the container 100, and introduces light into the one end 52. The LED 20 emits light in a wavelength area in which an absorption loss of the optical fiber 50 is changed by a gas process. For example, the LED 20 emits light with a wavelength around 630nm. Moreover, the light power meter 30 is optically connected to the other end 54 of the optical fiber 50 accommodated in the space of the container 100, and measures an amount of light coming out from the other end 54.

The PC 40 has a termination judging section 200 for controlling the LED 20 and the PC 40, a gas controlling section 210 for controlling the valve 60 and the valve 62, and a door-opening controlling section 220 for controlling the lock 122.

Similarly to Embodiment 1 shown in Figs. 1 and 2, the termination judging section 200 judges that the gas process has been terminated when the amount of light measured by the light power meter 30 has exceeded a threshold value. In addition, the termination judging section 200 may judge whether a ratio of the amount of light measured by the light power meter 30 to an amount of light introduced into one end 52 from the LED 20 exceeds a threshold value, in place of the amount of light. As further another example, the termination judging section 200 may judge whether a change rate of the amount of light measured by the light power meter 30 or a change ratio of the ratio of the amount of light measured by the light power meter 30 to the amount of light introduced into one end 52 from the LED 20 exceeds a threshold value.

When the termination judging section 200 judges that the gas process has been terminated, the gas controlling section 210 stops introducing gas and exhausting gas to the space in the container 100 by restricting flow volume of the valves 60 and 62. In this way, introduction or exhaustion of unnecessary gas can be prevented even after the gas process was terminated. Moreover, when the termination judging section 200 judges that the gas process has been terminated, the door-opening controlling section 220 releases the lock 122 to permit opening of the door 120. In this way, malfunction by opening of the door 120 can be prevented during processing gas.

As above, according to the embodiment shown in Fig. 3, it is possible to judge whether the gas process has been terminated in a state that the optical fiber 50 is accommodated in the container 100. In this way, compared with the judgment of the termination of the gas process after taking out the optical fiber 50 from the container 100, it is possible to reduce an amount of optical fiber used for sampling and early terminate a gas process of the optical fiber 50.

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

### INDUSTRIAL APPLICABILITY

It is possible to simultaneously detect the termination of a gas process and utilize it for various gas processes of an optical fiber.

## Claims

1. An apparatus for processing an optical fiber in a gas atmosphere comprising:
a door of a treatment container that puts the optical fiber in and out;
a gas introducing port;
a gas exhausting port; and
a sampling fiber taking-out port.

2. The optical fiber processing apparatus as claimed in claim 1, further comprising:
a light source that is connected to the optical fiber drawn from said sampling fiber taking-out port; and
a light power meter that measures an absorption loss.

3. The optical fiber processing apparatus as claimed in claim 1 or 2, further comprising mechanism that monitors a value of said light power meter and judges the termination of the gas process from the change of the value.

4. The optical fiber processing apparatus as claimed in any one of claims 1 to 3, wherein said light source emits light in a wavelength area in which an absorption loss of the optical fiber is changed by the gas process.

5. The optical fiber processing apparatus as claimed in any one of claims 1 to 4, wherein a wavelength of light emitted from said light source is an absorption loss peak wavelength of the optical fiber or a wavelength around the peak wavelength.

6. The optical fiber processing apparatus as claimed in any one of claims 1 to 5, wherein the gas used for the process is heavy hydrogen or gas containing heavy hydrogen.

7. The optical fiber processing apparatus as claimed in any one of claims 1 to 6, wherein a wavelength of light emitted from said light source is around 630nm.

8. A method for processing an optical fiber in a gas atmosphere comprising the steps of:
putting the optical fiber in a treatment container;
filling the container with treatment gas;
drawing the optical fiber from a sampling fiber taking-out port provided in the container to connect the fiber to a light source and a light power meter;
monitoring an absorption loss of the optical fiber during processing gas; and
simultaneously judging the termination of the gas process from the change of the absorption loss.

9. The optical fiber processing method as claimed in claim 8, wherein the termination of the gas process is judged when an amount of light in a predetermined wavelength arrives at a set amount of light.

10. The optical fiber processing method as claimed in claim 8 or 9, wherein the light source emits light in a wavelength area in which an absorption loss of the optical fiber is changed by the gas process.

11. The optical fiber processing method as claimed in any one of claims 8 to 10, wherein a wavelength of light emitted from the light source is an absorption loss peak wavelength of the optical fiber or a wavelength around the peak wavelength.

12. The optical fiber processing method as claimed in any one of claims 8 to 11, wherein the gas used for the process is gas containing heavy hydrogen.

13. The optical fiber processing method as claimed in any one of claims 8 to 12, wherein a wavelength of light emitted from the light source is around 630nm.

14. An optical fiber that is processed in a gas atmosphere using the optical fiber processing method as claimed in any one of claims 8 to 13.

15. An optical fiber processing apparatus that processes an optical fiber in a gas atmosphere, comprising:
a container main body that has an opening for putting the optical fiber in and out;
a door that opens and closes the opening and forms airtight space between the door and the container main body by closing the opening;
a gas introducing port that introduces gas into the space formed by the container main body and the door;
a gas exhausting port that exhausts gas from the space formed by the container main body and the door; and
an inside-outside connecting section that optically connects an outside of the space formed by the container main body and the door and both ends of the optical fiber accommodated in the space.

16. The optical fiber processing apparatus as claimed in claim 15, wherein said inside-outside connecting section draws and holds both ends of the optical fiber accommodated in the space to the outside of the space.

17. The optical fiber processing apparatus as claimed in claim 16, wherein said inside-outside connecting section is arranged in said container main body.

18. The optical fiber processing apparatus as claimed in claim 17, wherein said inside-outside connecting section is detachable from said container main body.

19. The optical fiber processing apparatus as claimed in claim 15, further comprising:
a light source that is arranged outside the space and introduces light into one side of the both ends of the optical fiber accommodated in the space; and
a light power meter that is arranged outside the space and measures an amount of light coming out from the other side of the both ends of the optical fiber accommodated in the space.

20. The optical fiber processing apparatus as claimed in claim 19, wherein said light source emits light in a wavelength area in which an absorption loss of the optical fiber is changed by the gas process.

21. The optical fiber processing apparatus as claimed in claim 20, wherein said light source emits light with a wavelength around 630nm.

22. The optical fiber processing apparatus as claimed in claim 19, further comprising a termination judging section that judges that the gas process has been terminated when the amount of light measured by said light power meter has exceeded a threshold value.

23. The optical fiber processing apparatus as claimed in claim 19, further comprising a termination judging section that judges that the gas process has been terminated when a ratio of the amount of light measured by said light power meter to an amount of light from said light source has exceeded a threshold value.

24. The optical fiber processing apparatus as claimed in claim 19, further comprising a termination judging section that judges that the gas process has been terminated when a rate of change of the amount of light measured by said light power meter has exceeded a threshold value.

25. The optical fiber processing apparatus as claimed in claim 19, further comprising a termination judging section that judges that the gas process has been terminated when a change rate of a ratio of the amount of light measured by said light power meter to an amount of light from said light source has exceeded a threshold value.

26. The optical fiber processing apparatus as claimed in any one of claims 22 to 25, further comprising a gas controlling section that stops the introduction of gas and the exhaustion of gas to the space when said termination judging section judges that the gas process has been terminated.

27. The optical fiber processing apparatus as claimed in any one of claims 22 to 26, further comprising a door-opening controlling section that permits said door to be opened when said termination judging section judges that the gas process has been terminated.
